# EUROPEAN PATENT APPLICATION

(11) **EP 1 938 955 A1**
(43) Date of publication of application: **02.07.2008**
(21) Application number: 07123671.5
(22) Date of filing: 19.12.2007
(51) Int. Cl.: B29C 70/32, B29C 35/16, B29C 53/80

(54) **Continuous debulking systems**

(30) Priority: 28.12.2006 US 646767
(71) Applicant: General Electric Company, Schenectady, NY 12345 (US)
(72) Inventor: Blanton, Lee Alan, Cincinnati, OH 45243 (US); Curtis, Curt Brian, West Chester, OH 45069 (US); Miller, David Scott, Cincinnati, OH 45251 (US); Fairbanks, Robert Paul, Cincinnati, OH 45230 (US)
(74) Representative: Illingworth-Law, William Illingworth

(57) **Abstract**

Continuous debulking systems including in combination a spool (10) for providing a fabric (12), a heating apparatus (16) for heating the fabric (12) as the fabric (12) is unrolled from the spool (10) to produce a heated fabric (18), a composite structure forming tool (14) for wrapping the heated fabric (18) thereabout, a resin applicator (26) for applying resin to the heated fabric (18) as the heated fabric (18) is wrapped about the composite structure forming tool (14) to produce a resin rich fabric surface (28) to which a subsequent ply of heated fabric (18) is applied to produce an impregnated composite material (30), and a pressure roller (24) for concurrently debulking and cooling the impregnated composite material (30) to produce a composite structure preform (32).

## Description

### TECHNICAL FIELD

Embodiments described herein generally relate to continuous debulking systems. More particularly, embodiments herein generally describe continuous systems for debulking fabric used to make composite structure preforms.

### BACKGROUND OF THE INVENTION

In recent years composite materials have become increasingly popular for use in a variety of aerospace applications because of their durability and relative light weight. Although composite materials can provide superior strength and weight properties, fabricating structures from composite materials may still pose some challenges.

For example, fabrics used to make composite structures may inherently have a substantial amount of bulk. During layup and cure of a composite material, that is the fabric impregnated with resin, this bulk can result in the formation of wrinkles in the final composite structure. To help prevent wrinkles, the fibers of the composite material can be consolidated, or compressed, into a dimension that is closer to the desired final cured thickness. This consolidation occurs during debulk.

Current fabrication methods generally involve the use of hot and cold vacuum bagging for debulking the composite material. However, even debulking the composite material prior to cure cannot eliminate the previously described formation of wrinkles, particularly when fabricating a cylindrically shaped composite structure. This is because as the fabric is layed up about a cylindrically shaped composite structure forming tool there is an increased likelihood that the bulky fabric will crease or fold, which can produce wrinkles in the final composite structure.

In addition, when fabricating cylindrically shaped composite structures current debulking techniques require vacuum bagging after the application of every four to six plies of fabric. As an average composite structure typically comprises at least about sixty plies of fabric, this can be a time consuming process. Additionally, the non-continuous nature of this process can further contribute to the formation of wrinkles as the repetitive starting and stopping for debulking can increase the likelihood of creases or folds in the fabric.

Accordingly, there remains a need for time effective systems for debulking fabrics used to make composite structures such that the formation of wrinkles is reduced.

### BRIEF DESCRIPTION OF THE INVENTION

Embodiments herein generally relate to continuous debulking systems comprising in combination a spool for providing a fabric, a heating apparatus for heating the fabric as the fabric is unrolled from the spool to produce a heated fabric, a composite structure forming tool for wrapping the heated fabric thereabout, a resin applicator for applying resin to the heated fabric as the heated fabric is wrapped about the composite structure forming tool to produce a resin rich fabric surface to which a subsequent ply of heated fabric is applied to produce an impregnated composite material, and a pressure roller for concurrently debulking and cooling the impregnated composite material to produce a composite structure preform.

These and other features, aspects and advantages will become evident to those skilled in the art from the following disclosure.

### BRIEF DESCRIPTION OF THE DRAWINGS

While the specification concludes with claims particularly pointing out and distinctly claiming the invention, it is believed that the embodiments set forth herein will be better understood from the following description provided by way of example only, in conjunction with the accompanying figures, in which like reference numerals identify like elements.
FIG. 1 is a schematic side view of one embodiment of a continuous debulking system in accordance with the description herein;
FIG. 2 is a schematic elevated front view of one embodiment of a composite structure forming tool in accordance with the description herein;
FIG. 3 is a schematic front view of one embodiment of a pressure roller in accordance with the description herein; and
FIG. 4 is a schematic front view of an alternate embodiment of a pressure roller in accordance with the description herein.

### DETAILED DESCRIPTION OF THE INVENTION

Embodiments described herein generally relate to systems for continuously debulking fabric used to make composite structure preforms. As used herein, "continuous" means that once the fabrication process is initiated, it may continue without interruption until the desired composite structure preform is produced. While embodiments herein may generally focus on the fabrication of composite fan casing preforms of gas turbine engines, it will be understood by those skilled in the art that the description should not be limited to such. Indeed, as the following description explains, the methods described herein may be utilized on any generally cylindrically shaped composite structure.

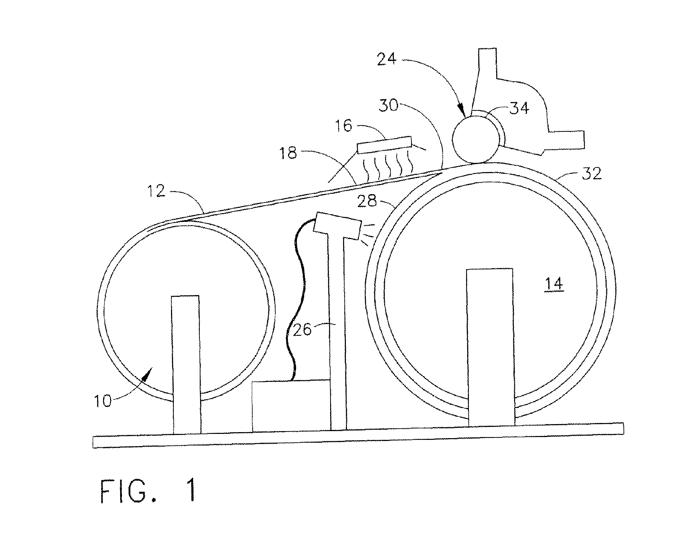

Initially, as shown in FIG.1, systems set forth herein may involve providing a spool 10 of fabric 12. By "fabric" it is meant any material to which resin can be applied to form a composite material. While a variety of fabrics 12 may be acceptable for use herein, in one embodiment fabric 12 may comprise a ply of material made from any suitable reinforcing fiber known to those skilled in the art, including, but not limited to, glass fibers, graphite fibers, carbon fibers, ceramic fibers, aromatic polyamide fibers such as poly(p-phenylenetherephtalamide) fibers (i.e. KEVLAR®), and combinations thereof. In one embodiment, fabric 12 may comprise carbon fibers. Additionally, fabric 12 may take any of a variety of forms, such as, but not limited to, multidirectional textile preforms such as weaves, braids and crimped or non-crimped non-wovens, having from about 3000 to about 24,000 fiber filaments per fiber tow of the material.

As fabric 12 is unrolled from spool 10, it may be heated to produce a heated fabric 18 that can be transferred onto a composite structure forming tool 14, which may be located adjacent to spool 10 to facilitate transfer. It will be understood that in one embodiment heating and transferring fabric 12 may occur concurrently in accordance with the continuous nature of the systems described herein.

Heating may be accomplished using any heating apparatus 16 known to those skilled in the art such as a radiant heater, forced air heater, heated air knife, heated rollers, heated platen and the like. Fabric 12 may be heated to any desired temperature to produce heated fabric 18. It will be understood that the term "heated fabric" can refer to the initial ply of heated fabric layed up about tool 14, as well as any subsequent plies layed up on top of the initial ply during the fabrication of the composite structure preform. In one embodiment, fabric 12 may be heated such that when resin is subsequently applied to heated fabric 18, heat from heated fabric 18 can help melt the resin, as explained herein below. By adding only enough heat to aid in melting the resin, the amount of heat that will need to be removed in later steps is minimized. This can help facilitate a continuous system.

Those skilled in the art will understand that the desired heating temperature can vary according to the fabric and resin used. However, in general it may be desirable for heated fabric 18 to have a temperature of from about 65° C to about 120° C, and in another embodiment from about 80° C to about 105° C for the application of epoxy resins; from about 65° C to about 160° C, and in another embodiment from about 80° C to 135° C for the application of BMI resins; and from about 240° C to about 275° C, and in another embodiment from about 250° C to about 270° C for the application of polyimide resins. It will be understood that the temperature of heated fabric 18 may decrease slightly as heated fabric 18 is wrapped about tool 14. However, heated fabric 18 will generally still remain within the previously described temperature ranges until the resin is applied. Regardless of the temperature to which it is heated, heated fabric 18 may be continuously wrapped about composite structure forming tool 14.

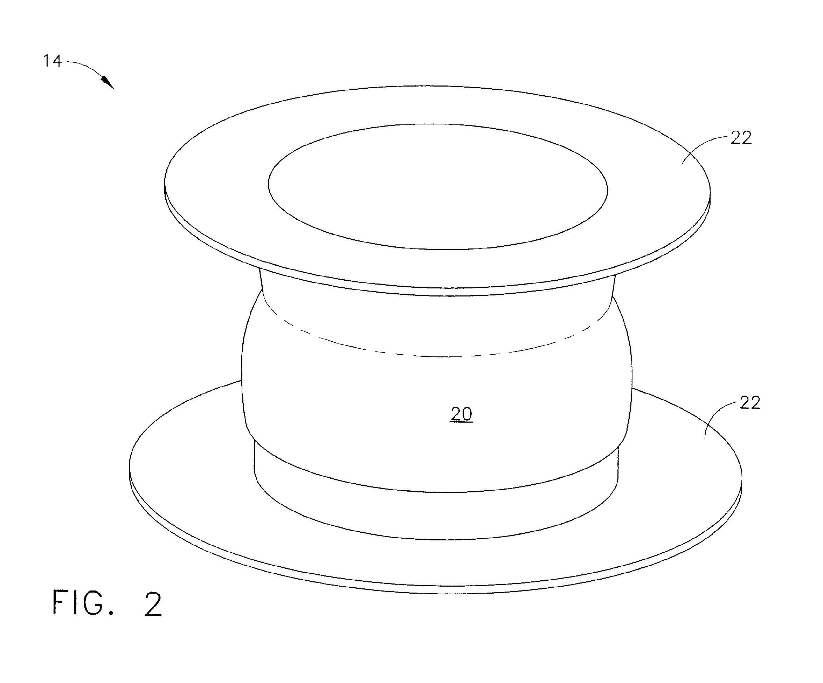

Composite structure forming tool 14 may have any geometry desired to correspond to the composite structure being fabricated. In one embodiment tool 14 may be used to fabricate a gas turbine engine fan casing preform and therefore may be circumferentially shaped, have a generally cylindrically shaped core 20, and endplates 22 removeably attached to core 20, as shown generally in FIGS. 1 and 2. See, for example, U.S. Patent Application No. 2006/0134251 to Blanton et al. Fabric 12 may initially contact tool 14 at starting point X. Resin may be used to tackify the end of fabric 12 to hold it in place as it is wrapped about core 20 of tool 14, which can continuously rotate axially by either manual or mechanical means.

As heated fabric 18 is wrapped about core 20 of tool 14, resin may be applied using any resin applicator 26 known to those skilled in the art, such as a hot melt glue applicator, to produce a resin rich fabric surface 28. The resin used may vary however, in one embodiment the resin may be a hot melt resin. Hot melt resins acceptable for use herein may include, but are not limited to, epoxy resins, BMI resins, polyimide resins and combinations thereof. In one embodiment, it may be desirable to apply resin to heated fabric 18 just prior to tool 14 making a complete revolution back to starting point X. In this way, the resulting resin rich fabric surface 28 can be immediately covered with a subsequent ply of heated fabric 18 as it is unrolled from spool 10 and transferred to tool 14. Because the resin will have a tendency to flow towards the heat of heated fabric 18, the resin from the resin rich fabric surface 28 can infiltrate the subsequent ply of heated fabric 18, thereby adhering the plies together to produce an impregnated composite material 30.

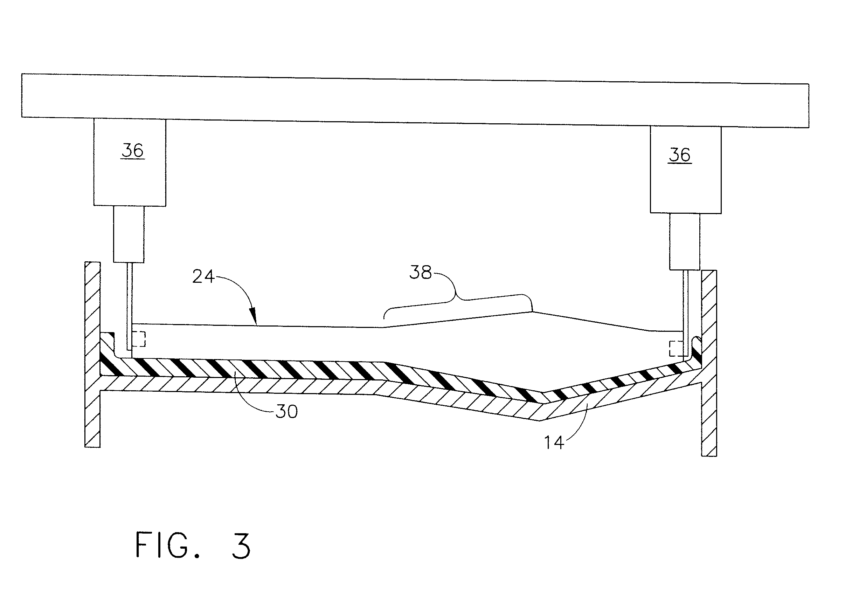

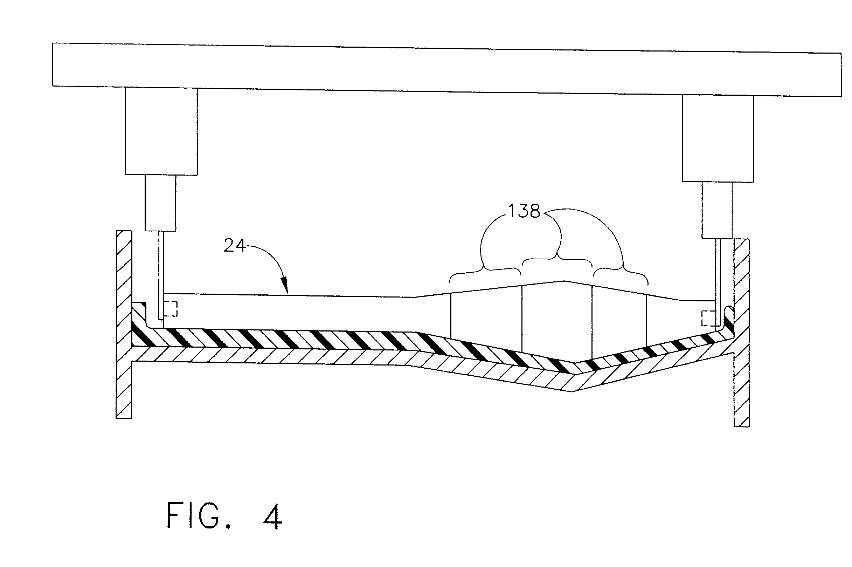

Impregnated composite material 30 may then be debulked using a pressure roller 24. Debulking helps compress the plies of impregnated composite material 30 together. Optionally, in one embodiment, pressure roller 24 may be pressure released to periodically relieve pressure that builds up during the continuous wrapping and debulking process. More specifically, as shown in FIG. 3 air cylinders 36 attached to pressure roller 24 can be used to apply pressure to roller 24, which in one embodiment can have varying diameters. As roller 24 rotates, the larger diameter area travels farther than the smaller diameter area, thereby creating at least one stress accumulation zone 38 therebetween that can result in the impregnated composite material wrinkling and/or folding. To help prevent such distortion from occurring, the pressure can be relieved, or pulsed, periodically to allow the impregnated composite material to spring back to a relaxed, distortion-free state before irreversible damage occurs. In another embodiment shown in FIG. 4, pressure roller 124 can be segmented into two or more smaller rollers to create at least two smaller stress accumulation zones 138 and reduce the frequency with which the pressure needs to be relieved.

In addition to being debulked, impregnated composite material 30 may also be cooled to solidify the resin and hold the plies of impregnated composite material 30 in the desired compressed state needed to form a composite structure preform 32. As used herein, "composite structure preform" refers to debulked plies of impregnated composite material comprising solidified, uncured resin. Cooling may be accomplished using any of a variety of cooling devices, such as an air conditioning system. In an alternate embodiment cooling may be carried out concurrently with debulking by using pressure roller 24 as the cooling device, as shown in FIG. 1. More particularly, in this embodiment cooled fluid may be circulated through pressure roller 24 to cool an outer surface 34 thereof.

Those skilled in the art will understand that the desired cooling temperature will vary according to the fabric and resin, as well as the temperature to which the fabric was initially heated. However, in general it may be desirable to cool impregnated composite material 30 to a temperature of from about 18° C to about 27° C, and in another embodiment from about 20° C to about 25° C when using epoxy resins; from about 60° C to about 80° C, and in another embodiment from about 65° C to about 70° C when using BMI resins; and from about 150° C to about 225° C, and in another embodiment from about 190° C to about 210° C when using polyimide resins. As previously described, by heating the fabric to only the minimum temperature needed to help melt the resin, it can minimize the amount of heat that must be removed during cooling to solidify the resin and obtain composite structure preform 32.

Once the desired thickness is obtained, composite structure preform 32 is ready for the final curing process. As will be understood by those skilled in the art, the final cure tooling and process may vary according to such factors as resin used, part geometry, and equipment capability.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A continuous debulking system comprising in combination:
a spool (10) for providing a fabric (12);
a heating apparatus (16) for heating the fabric (12) as the fabric (12) is unrolled from the spool (10) to produce a heated fabric (18);
a composite structure forming tool (14) for wrapping the heated fabric (18) thereabout;
a resin applicator (26) for applying resin to the heated fabric (18) as the heated fabric (18) is wrapped about the composite structure forming tool (14) to produce a resin rich fabric surface (28) to which a subsequent ply of heated fabric (18) is applied to produce an impregnated composite material (30); and
a pressure roller (24) for concurrently debulking and cooling the impregnated composite material (30) to produce a composite structure preform (32).

2. A system according to claim 1 wherein the spool (10) comprises a fabric (12) selected from the group consisting of glass fibers, graphite fibers, carbon fibers, ceramic fibers, aromatic polyamide fibers, and combinations thereof.

3. A system according to any of claims 1 or 2 wherein the resin applicator (26) applies a resin selected from the group consisting of epoxy resins, BMI resins, polyimide resins and combinations thereof.

4. A system according to any of claims 1, 2 or 3 wherein the heating apparatus (16) heats the fabric to a temperature of from about 65° C to about 120° C for the application of epoxy resins, to from about 65° C to about 160° C for the application of BMI resins, and to from about 240° C to about 275° C for the application of polyimide resins.

5. A system according to any one of the preceding claims, wherein the heating apparatus (16) comprises a radiant heater.

6. A system according to any one of the preceding claims, wherein the pressure roller (24) comprises a cooled outer surface (34) for cooling the impregnated composite material (30).

7. A system according to claim 6 wherein the cooled outer surface (34) of the pressure roller (24) cools the impregnated composite material (30) to a temperature of from about 18° C to about 27° C for epoxy resins, to from about 60° C to about 80° C for BMI resins, and to from about 150° C to about 225° C for polyimide resins.

8. A system according to any one of the preceding claims, wherein the pressure roller (24) comprises varying diameters.

9. A system according to any one of the preceding claims, wherein the pressure roller (24) is pressure released.

10. A system according to any one of the preceding claims, wherein the composite structure preform (32) comprises a gas turbine engine fan casing.
